# EUROPEAN PATENT SPECIFICATION

(11) **EP 0 675 687 B1**
(45) Date of publication and mention of the grant of the patent: **05.03.1997**
(21) Application number: 94903783.2
(22) Date of filing: 09.12.1993
(51) Int. Cl.: A23L 1/035, A23D 7/00, A23L 1/307

(54) **USE OF STERILE MESOMORPHIC PHASES IN FOOD PRODUCTS**
VERWENDUNG VON STERILEN MESOMORPHEN PHASEN IN NAHRUNGSMITTELN
UTILISATION DE PHASES MESOMORPHES STERILES DANS LES PRODUITS ALIMENTAIRES

(30) Priority: 23.12.1992 EP 92204076
(43) Date of publication of application: 11.10.1995
(73) Proprietor: UNILEVER PLC, London EC4P 4BQ (GB); UNILEVER N.V., 3013 AL Rotterdam (NL)
(72) Inventor: HEERTJE, Isaac, c/o Unilever Research, NL-3133 AT Vlaardingen (NL); HENDRICKX, Henricus Arnoldus C.M., D-2870 Delmenhorst (DE); SCHOLTES, Jacobus Leonardus Hermanus, c/o Unilever, NL-3133 AT Vlaardingen (NL); SIKKING, Rob, c/o Unilever Research, NL-3133 AT Vlaardingen (NL)
(74) Representative: Boerma, Caroline
(86) International application number: EP9303549
(87) International publication number: WO9414338

(56) References cited:
- EP-A- 0 315 472
- WO-A-91/18514
- WO-A-92/09209
- CA-A- 1 180 250
- DATABASE WPI Week 9250, Derwent Publications Ltd., London, GB; AN 92-411712 & JP,A,4 308 747 (KAO CORP.) 30 October 1992
- JOURNAL OF THE AMERICAN OIL CHEMISTS' SOCIETY vol. 42 , 1965 , CHAMPAIGN ILL. pages 1068 - 1070 E.S. LUTTON 'PHASE BEHAVIOR OF AQUEOUS SYSTEMS OF MONOGLYCERIDES'
- CEREAL CHEMISTRY vol. 58, no. 3 , 1981 , MINNEAPOLIS pages 158 - 164 N. KROG 'THEORETICAL ASPECTS OF SURFACTANTS IN RELATION TO THEIR USE IN BREADMAKING'

## Description

The present invention relates a process for the preparation of sterile mesomorphic phases and to products containing said sterile mesomorphic phases.

It is known from WO 92/09209 to incorporate mesomorphic phases of edible surfactants in food products, for example as fat-replacer, structuring agent and whipping agent. This specification also describes the pasteurization of zero fat spreads containing the mesomorphic phase.

It is further known from The Journal of the American Oil Chemists' Society (JAOCS), Vol. 42, pp 1068-1070, in particular on page 1069, that no problems and reversible phase transformations occur when heating aqueous mixtures of certain monoglycerides containing from 0 to 45% of water to above the Krafft temperature and cooling down again. However, compositions with low monoglyceride percentages and high water contents were not investigated and reported.

A problem with pasteurized products is that, although they are substantially free from microorganisms, they often still contain spores. Therefore pasteurized products either need a preservative or a low pH, in order to become ambient stable. A further problem with products as e.g. described in WO 92/09209 is that sometimes their whippability sometimes is limited.

It is an object of the invention to solve one or more of the above problems in the case of whipppable products containing a sterile mesomorphic phase with higher percentages of water and lower percentages of edible surfactant(s). Surprisingly it has been found that this can be achieved if the mesomorphic phase is prepared in a special process.

Accordingly the present invention relates to a process for the preparation of a sterile mesomorphic phase of surfactants, comprising the sequential steps of:
(a) preparing a premix comprising surfactant(s) and 98-60 wt% of water and 0.1 to 30 wt% of biopolymer at a temperature above the Krafft temperature;
(b) sterilising the premix at a temperature of more than 115 °C; and
(c) cooling the premix to below the Krafft temperature of the surfactants.

Although applicants do not wish to be bound by any theory, it is believed that the following occurs in steps (a) to (c) as indicated above.

During step (a) it is believed that some form of structuring of the surfactants occurs, resulting in the formation of a "liquid" mesomorphic system. If the premix is heat-treated in step (b) after the formation of these "liquid" mesomorphic structures then surprisingly said structures are not irreversibly destroyed during the heating step. The cooling in step (c) then results in the formation of the sterile mesomorphic structure.

Step (a) involves the preparation of a premix comprising one or more surfactants and water in suitable percentages at a temperature above the Krafft temperature. The Krafft temperature of the surfactant(s) will generally vary in a broad range. If the Krafft point is above ambient temperature, then step (a) will involve a heating step. Either the ingredients will be premixed and then heated, or the surfactant(s) are added to heated water. For example, if saturated monoglycerides are used as surfactants, preferably step (a) involves the heating to a temperature of 30 - 75 °C, more preferred 50 - 70 °C. The time of keeping the premix at a temperature above the Krafft temperature is preferably at least 5 seconds, more preferred 1 to 100 minutes. When desired, other ingredients may be added to the premix. If this occurs between step (a) and (b), (partial) cooling, for example below the Krafft temperature, may be desired.

Suitable sterilising times and temperatures in (b) result in sterile products, i.e. product having a Clostridium Botulinum spore reduction of at least 10⁻¹² as compared to the non-sterilised product. Preferably the sterilising conditions render the mesomorphic phase substantially free from Clostridium Botulinum spores (less than 1 spore per 1000 kg). Preferably step (b) involves the heating to a temperature of at least 120 °C, more preferred 120 - 155 °C, most preferred 130 -150 °C. The time of heating will generally be from 0.1 second to 100 minutes, depending on the temperature of sterilisation, for example for 120 °C the heating time will generally be from 1 - 30 minutes; for 130 °C 1 to 500 seconds and for 130 to 150 °C 0.1 to 180, more general 1 to 25 seconds. In this context the heating to temperatures of 130 - 150 °C, say around 140 °C is preferred because, surprisingly, around this temperatures a good balance is found between spore reduction (rapid increase with temperature), costs of heating (increase with an increase of temperature), time of heating (decrease with an increase of temperature) and the development of off-flavours, side-reactions etc (increase with an increase of temperature).

Step (c) involves the cooling of the mesomorphic phase to below the Krafft temperature. Generally this cooling will be to an ambient temperature or lower, for example refrigerator temperatures (5°C).
Preferably cooling is done in a short period e.g. ambient or refrigerator temperature are preferably reached within 5 minutes after sterilising, more preferred in 0.5 to 3 minutes, for example about 1 or 2 minutes. This quick cooling is believed to be advantageous because this helps in avoiding the sometimes less desired formation of stable cubic mesomorphic phases.

Before, during or after step c, the product can be aseptically filled into a suitable package for further use. However, it is preferred that the product is subjected to continuous (as opposed to batch) sterilisation, i.e. sterilisation before packaging. Whippable food products of the invention are preferably packed into single use packs, i.e. packs which contain an amount of product which is to be used at the same time, for example portion packs. Other suitable packs may be multiple use packages e.g. containing 1 to 10,000 g. of product. For maintaining the sterilised nature of the product that package should preferably be closed e.g. sealed. Equally, before, during or after step c the product may be mixed with further ingredients, e.g. to form a food product or other product. Preferably these ingredients are mixed either before sterilisation or after sterilisation under sterile conditions. This ensures the sterile nature of the final aseptically filled product.

Sterile mesomorphic phases comprising suitable percentages of water, edible surfactant and biopolymer as described above may suitably be used in various whippable food products. For this purpose the mesomorphic phases are made of edible surfactants. Suitable whippable food products are for example products such as bavarois, non-dairy cream and mousses. Especially preferred is the use of sterile mesomorphic phases of edible surfactants in ambient stable food products which preferably have pH of at least 4.6. Most preferred is the use of these sterile mesomorphic phases in ambient stable food products having a pH of at least 4.6 and which are free of preservatives. These products could previously not be made. Another preferred embodiments involves the use of sterile mesomorphic phases in certain whippable products, especially in products which after whipping in standard whipping equipment have a specific volume of more than 1.25 litre per kg.
The mesomorphic phase and its method of preparation is known to food scientists. In the "Lipid Handbook" of Gunstone, Harwood and Padley (Chapman and Hall, 1986) such phases are mentioned at page 227. Further detail may be found in "Food emulsions" of S. Friberg (Marcel Decker, 1976 at page 82).

For the purpose of the invention the term mesomorphic phase is intended to include all semi-ordered phases of water and edible surfactant materials. Examples of mesomorphic phases are cubic, hexagonal, coagel and lamellar phases. Preferred mesomorphic phases for use in accordance with the invention are lyotropic phases; especially preferred are lamellar phases. For the purpose of the present invention, the term lamellar phase refers to any system having a pattern of alternating bilayers of surfactants and water. Examples of lamellar phases are lamellar droplet phases, lamellar gel phases and lamellar phases containing extended parallel layers of surfactants and water. Not within the scope of the invention are mesomorphic structures e.g. liposomes which act as carrier materials e.g. for fats or flavouring.

The presence of mesomorphic phases e.g. in food products may be detected by any method suitable for the detection of regular arrangements of surfactant materials. Suitable methods include for example NMR, Electron microscopy, Differential scanning calorimetry, light microscopy and X-ray diffraction.

For some applications the sterile mesomorphic phase preferably is a lamellar phase, for example an alpha-gel phase. These phases are particularly preferred, because they can include a sensational amount of water, e.g. 98 or even 99 wt.%, based on the product. Especially preferred are products which contain a stable lamellar structure, i.e. an alpha-gel structure that during storage for two weeks at ambient temperature or lower does not significantly (less than 50 % conversion) convert to non-lamellar structures. Under certain circumstances, for example at higher temperatures, it may occur that a hexagonal or cubic viscous isotropic mesophases are formed. Sometimes this is less preferred because of the rheological properties of this phase.

Another preferred element of the present invention is the presence of bulk regions of mesomorphic phases in food products. Most preferred is the presence of bulk regions of mesomorphic lamellar phases. Bulk phases preferably consist of either a more or less continuous mesomorphic phase or of discrete particles of mesomorphic phase, for example having a number average particle size of between 1 µm and 10,000 µm, more preferred more than 5 µm, e.g. 15 to 1500 µm.

Preferably food products in accordance to the invention contain at least 1% by weight of sterile mesomorphic phase of edible surfactant, more preferred 2-100 wt%, for example 3-20 wt%.

According to the present invention any surfactant may be used although lipidic substances are preferred. For food products any edible surfactant may be used. However, the use of other, non lipidic surfactants, for example carbohydrates is not excluded. In general the preferred edible surfactants are selected from the group consisting of nonionic surfactants, anionic surfactants and cationic surfactants.

Preferred non-ionic or zwitterionic surfactants are edible monoglycerides, diglycerides, poly-glycerol esters, non-ionic phospholipids e.g. phosphatidylcholine, non-fatty carboxylic acid esters of fatty acid esters, partial sugar-fatty acid esters and, partial fatty acid esters of polyols, alkali metal salts of fatty acids and mixtures thereof.

Preferred cationic surfactants are cationic non-fatty carboxylic acid esters of fatty acid esters and mixtures thereof.

Preferred anionic surfactants are lactylated fatty acid salts, anionic phospholipids, anionic non-fatty carboxylic acid esters of fatty acid esters and their metal salts, fatty acids and their metal salts and mixtures thereof.

The fatty acid chains used in these surfactants can be of any type and origin. Preferably, however C₈₋₂₈ fatty acid chains are present, more preferred C₁₂₋₂₂, for example C₁₄₋₁₈. The fatty acids may for example be saturated, unsaturated, fractionated or hydrogenated and be derived from natural (for example dairy, vegetable or animal) source or synthetic sources.

Preferred surfactants for use in products of the invention comprise as part or all of the surfactants a material of the group monoglycerides, lecithin (or other phospholipids) and lactylated fatty acid salts.

While foodstuffs according to the present invention can comprise a mesomorphic phase comprising 99-5 wt.% of water, it is preferred that the mesomorphic phase comprises 98-60 wt.% and in particular 97-80 wt.% of water, the percentages being based on the total weight of the mesomorphic phase. The total water level of products of the invention may for example be up to 99%, for example 10-90%, conveniently 20-80%. The balance of the mesomorphic phase may be the above defined surfactants e.g. at a level of at least 0.5 wt% up to say 30 wt% on mesomorphic phase, more preferred 1-20 wt%, most preferred 2-12 wt%.

Preferably the total level of edible surfactants in food products of the invention is from 0.1 to 30%, more preferred 0.2-15%, most preferred 0.5-10% by weight of the foodstuff.

Typical embodiments of the invention as illustrated hereafter by example comprise as the sterile mesomorphic phase, a combination of a major amount of a non-ionic surfactant and a minor amount of an ionic co-surfactant. If biopolymers are present, these may become part of the mesomorphic structure.

Preferably, the mesomorphic phase comprises 1-30%, more preferred 2-10 wt.% of non-ionic surfactant for example monoglycerides and 0.005-10% more preferred 0.01-1 wt.% of ionic co-surfactant for example an alkali metal salt of a lactylated fatty acid, preferably sodium stearoyl lactylate the percentages being based on the total weight of the mesomorphic phase.

The classification "non-ionic", "cationic" and "anionic" for the surfactants is of course dependent on the pH-value of the foodstuff in which the surfactants are used.

Preferably the nonionic surfactant and the ionic surfactant are used in weight ratios of from 100 : 1 to 1 : 10, more preferred 50 : 1 to 1 : 1, for example 40 : 1 to 10 : 1.

Preferred non-ionic surfactants are monoglycerides, alkali metal salts of fatty acids, lactylated esters of monoglycerides and phospholipids. Preferred ionic co-surfactants are alkali-metal salts of lactylated fatty acids, e.g. sodium stearoyl lactylate (SSL), citric acid esters, ionic phospholipids (phosphatidic acid (PA), succinated esters, diacetyl tartaric acid ester of monoglyceride (DATEM).

While foodstuffs according to the invention generally will comprise 0 to 80% by weight of fat, the preferred level of this ingredient is 0-79 wt.% fat, for example 0 to 40%. As indicated above a preferred function of the sterile mesomorphic phase is as a fat-replacer for part or all of the fat normally present in the food product. Preferably the food-product has a caloric content which is at least 30 % less than the comparable full-fat product, also preferred are products wherein the fat level is less than 50 % of the full fat product.

Surprisingly it has also been found that the mesomorphic phase, which is used according to the invention, can be used in foodstuffs containing relatively high levels of electrolyte, without affecting the structuring capability of the system. One example of electrolytes that may be incorporated is be sodium chloride. The amount of electrolytes such as salt in foodstuffs according to the invention preferably ranges from about 0.01 - 5 wt.%, more preferred 0.1 to 5%, for example 0.2 to 3% based on the total weight of the food product.

A very preferred embodiment of the present invention concerns the use of biopolymers. These biopolymers are preferably added to the system in step (a) as indicated above. Although applicants do not wish to be bound by any theory, it is believed that the addition of these materials in step (a) may lead to the incorporation of part of the biopolymer material into the "liquid" mesomorphic phase, which after sterilising (step b) and cooling leads to a sterile mesomorphic phase which is particularly stable during storage. Suitable bio-polymers are for example carbohydrates e.g. gums such as guar, LBG and xanthan, starches and carrageenan, or proteins e.g. milk protein, gelatin, soy protein. Especially preferred is milk protein as part or all of the biopolymers. Suitable sources for this protein are for example skimmed milk, skimmed milk powder, butter milk powder, whey powder, whey, egg protein and sodium caseinate.

Preferably the level of biopolymer materials is from 0.1 to 60 wt % based on the weight of the product. With respect to the surfactants it is preferred that the weight ratio of surfactant to biopolymers in from 10 : 1 to 1 : 50.

For preparing food-products containing the sterile mesomorphic phase in accordance to the invention, it is possible to prepare the sterile mesomorphic phase separately and add this phase as an ingredient to the other ingredients of the product, or it is possible to add one or more other ingredients of the composition to the premix under (a). Preferably, however the ingredients are added such that the final food product is sterile. This can be achieved by adding the ingredients prior to sterilisation or by adding sterile ingredients.

The invention, will be further illustrated by means of a number of specific embodiments: it will be evident that the scope of the invention is not limited to these specific embodiments.

Another embodiment of the invention is the use of sterile mesomorphic phases of edible surfactants, as generally specified in the above, in spreads. Especially preferred is their use in spreads as a fat replacer.

A preferred embodiment of the invention is the use of sterile mesomorphic phases of edible surfactant(s), suitable water- and biopolymer content in whippable products, in particular whippable non-dairy creams, mousses, bavarois, etc. Preferred uses are a foam control agent and fat replacer.

Preferably the level of edible surfactant in whippable products is from 0.1 to 15% by weight, more preferred 1 to 10%, most preferred 2 to 8% by weight of the composition. Preferably the edible surfactant material comprises monoglycerides, for example at levels of 1 to 10%, more preferred 2 to 5% by weight. In addition to the monoglyceride co-surfactants may be present, for example at a level of 0 to 10%, more preferred 0.1 to 8%.

Preferably whippable products of the invention contain from 0.1 to 15 wt% of biopolymer materials. Preferred biopolymer materials are proteins, especially milk proteins.

In addition to the edible surfactant materials in the mesomorphic phase, whippable products in accordance to the invention may advantageously contain one or more other ingredients, for example sugar, emulsifiers, colorants, flavouring agents, fat (preferably vegetable fat), skimmed milk ingredients etc. For example the fat level may be from 0 to 80%, more preferred 0-40%, for example about 5%, 15% or 30%. The balance of the composition is preferably water.

As described above the sterile mesomorphic phase of edible surfactants may be prepared before mixing the remaining ingredients or may be formed in the presence of one or more other ingredients of the composition.

The invention will be illustrated by means of the following examples: All percentages in the examples are by weight of the composition unless indicated otherwise.

The following ingredients were used:

The surfactants named Hymono and Admul followed by a code all are trade names of Quest International. The various types of β-carotene were obtained from Hoffmann-La Roche Ltd, Basel, Switzerland. BMP is butter milk powder. SMP is skimmed milk powder. Salt is sodium chloride.

### Example 1

A mesomorphic phase of edible surfactant was made of the following ingredients:

| | |
|---|---|
| water | 89.0% |
| monoglycerides (*) | 6.0% |
| skimmed milk powder | 5.0% |

| | |
|---|---|
| Notes: * Hymono 8803 (ex Quest Int.) | |

The water was heated in a water-jacketed vessel until a temperature of 60°C. At that point all other ingredients were added to the water and the mixture was stirred gently, using a 'ribbon stirrer', for about 30 minutes. The pH of the product was set to a value of 7.0 using sodium hydroxide. The product was sterilised by and UHT treatment for 10 seconds at 140 °C using an indirect system. The product was cooled to 40 °C and aseptically filled into containers of 1 kg. The products were stored at ambient temperature.

The resulting product was a sterile mesomorphic phase of the edible surfactants and biopolymers of the alphagel type. The product could be used in the preparation of food products in accordance to the invention.

### Example 2

A mesomorphic phase was prepared with the following composition:

| | |
|---|---|
| Monoglyceride (*) | 8% |
| Sodium Stearoyl Lactylate (**) | 0.4% |
| pasteurized skimmed milk | balance |

| | |
|---|---|
| Notes * = Hymono 8903 (Quest Int) | |
| **= Admul SSL 2012 | |

All ingredients were hand blended at 65°C and the blend was neutralised with sodium hydroxide solution to a pH of 7.0. The resulting mixture was stirred for 5 minutes. The liquid mesomorphic phase thus obtained was UHT treated at 140 °C for 8 seconds. The product was cooled and aseptically filled into containers and stored at 5 °C or 20 °C. The resulting mesomorphic phase was sterile, ambient stable and of the alphagel type.

The whipping characteristics of the product were evaluated using a Hobart mixer at level 3. After 30 seconds of mixing the density was reduced from 1000 g/l to 440 g/l, further mixing resulted in a density of 40 g/l.

Similar results were obtained if the product was heated to 130 °C for 30 seconds.

### Example 3

A low calorie bavarois was prepared of the following ingredients:

| | |
|---|---|
| monoglyceride (Hymono 8803) | 6.2 % |
| gelatin (Bloom 250, acid) | 1 % |
| sugar | 11 % |
| strawberry syrup | 10 % |
| water | balance |

The monoglyceride was mixed with the water at 62 °C in a stirred vessel. After 10 minutes the remaining ingredients were added. The pH was set to 7 using sodium hydroxide. The products was sterilised at 142 °C for 16 seconds. After cooling to 25 °C the product was aseptically packed and stored at ambient temperature. The sterile product contained a mesomorphic phase of the alphagel type and showed after whipping a proper consistency and gave a good fatty impression.

### Example 4

An ambient stable whippable non-dairy cream was prepared of the following ingredients.

| | |
|---|---|
| monoglyceride (Hymono 8903) | 4.5 % |
| buttermilk powder | 8 % |
| guar gum | 0.2 % |
| bean oil | 10 % |
| Triodan 55 | 0.3 % |
| beta-carotene (2% in bean oil) | 0.01% |
| water | balance |

The water was heated to 60 °C in a stirred vessel, whereafter the monoglycerides, buttermilk powder and guar gum were added under stirring in an Ultra Turrax (ex Jamke & Kunkel). The pH was set to 7.0 using sodium hydroxide. After 10 minutes the solution was cooled to 40 °C and mixed with he remaining ingredients. The mix was homogenised in a two-steps homogeniser (50 and 25 bar) and sterilised using a UHT indirect tubular heat exchanger at 140 °C for 10 seconds. After cooling to 40 °C the product was aseptically packed and stored at 5 °C and 20 °C.

The resulting product was whippable, sterile, ambient stable over a period of several weeks and had a distinct fatty oral impression. The product could be used in many applications where traditionally a high fat (around 45 %) whipped cream is used.

## Claims

1. A process for the preparation of a whippable product comprising a sterile mesomorphic phase of an edible surfactant, which process comprises the sequential steps of:
(a) preparing a premix comprising surfactant(s) and 98-60 wt% water and 0.1% to 30 wt% of biopolymer(s) at a temperature above the Krafft temperature;
(b) sterilising the premix at a temperature above 115°C; and
(c) cooling the premix to below the Krafft temperature.

2. A process according to clad 1, wherein the premix also comprises 0.1 to 15 wt% of biopolymer(s), preferably proteins.

3. A process according to claim 1 or 2, wherein step (b) involves heating to a temperature of 130 to 150°C for a period of 0.1 to 180 seconds, more preferred 1 to 25 seconds.

4. A process according to claim 1, 2 or 3, wherein the surfactant(s) comprise a mixture of nonionic and ionic surfactant(s) in a weight ratio of 100:1 to 1:10.

5. A process according to one or more of the preceding claims, wherein the sterile mesomorphic phase is a lamellar phase.

6. A process according to one or more of the preceding claims comprising the step (d) of aseptic filling the product.

7. A process for the preparation of a whippable food product, wherein the whippable product comprising a sterile mesomorphic phase of surfactant(s) as obtained in accordance to claim 1 is mixed with other ingredients of the food product.

8. A process according to claim 1, wherein the premix under (a) contains other ingredients of the food product.

9. Whippable food product comprising a sterile mesomorphic phase of edible surfactant(s) obtained by sterilizing to a temperature above 115°C.

10. Whippable food product according to claim 9 comprising bulk regions of a sterile mesomorphic phase of edible surfactant(s).

11. Whippable food product according to claim 9 or 10 having a pH of at least 4.6 and preferably free from preservatives.

12. Whippable food product according to any of the claims 9-11 which has been selected from the group of bavarois, non-dairy cream and mousse.

## Patentansprüche

1. Verfahren zur Herstellung eines aufschlagbaren Produktes, umfassend eine sterile mesomorphe Phase eines eßbaren oberflächenaktiven Mittels, welches Verfahren die aufeinanderfolgenden Schritte umfaßt:
(a) Herstellen einer Vormischung, die ein oder mehrere oberflächenaktive Mittel und 98 bis 60 Gew.-% Wasser und 0,1 bis 30 Gew.-% eines oder mehrerer Biopolymere umfaßt, bei einer Temperatur oberhalb der Krafft-Temperatur,
(b) Sterilisieren der Vormischung bei einer Temperatur von mehr als 115°C und
(c) Abkühlen der Vormischung auf weniger als die Krafft-Temperatur.

2. Verfahren nach Anspruch 1, bei dem die Vormischung ferner 0,1 bis 15 Gew.-% Biopolymer(e), vorzugsweise Proteine, umfaßt.

3. Verfahren nach Anspruch 1 oder 2, bei welchem Schritt (b) das Erhitzen auf eine Temperatur von 130 bis 150°C für eine Dauer von 0,1 bis 180 Sekunden, insbesondere 1 bis 25 Sekunden, beinhaltet.

4. Verfahren nach Anspruch 1, 2 oder 3, bei welchem das oder die oberflächenaktiven Mittel eine Mischung nichtionischer und ionischer oberflächenaktiver Mittel in einem Gewichtsverhältnis von 100:1 bis 1:10 umfassen.

5. Verfahren nach irgendeinem der vorhergehenden Ansprüche, bei dem die sterile mesomorphe Phase eine lamellare Phase ist.

6. Verfahren nach irgendeinem der vorhergehenden Ansprüche, das den Schritt (d) des aseptischen Abfüllens des Produktes umfaßt.

7. Verfahren zur Herstellung eines aufschlagbaren Nahrungsmittels, bei dem das aufschlagbare Produkt, das eine sterile mesomorphe Phase eines oder mehrerer oberflächenaktiver Mittel, erhalten gemäß Anspruch 1, umfaßt, mit anderen Bestandteilen des Nahrungsmittels gemischt wird.

8. Verfahren nach Anspruch 1, bei dem die Vormischung unter (a) andere Bestandteile des Nahrungsmittels enthält.

9. Aufschlagbares Nahrungsmittel, umfassend eine sterile mesomorphe Phase eines oder mehrerer eßbarer oberflächenaktiver Mittel, erhalten durch Sterilisieren auf eine Temperatur von mehr als 155°C.

10. Aufschlagbares Nahrungsmittel nach Anspruch 9, umfassend Masseregionen einer sterilen mesomorphen Phase eines oder mehrerer eßbarer oberflächenaktiver Mittel.

11. Aufschlagbares Nahrungsmittel nach Anspruch 9 oder 10 mit einem pH-Wert von mindestens 4,6, das vorzugsweise frei von Konservierungsmitteln ist.

12. Aufschlagbares Nahrungsmittel nach irgendeinem der Ansprüche 9 bis 11, das aus der Gruppe von Bayrischer Creme, nichtmilchhaltigen Sahnen und Mousses ausgewählt ist.

## Revendications

1. Procédé de préparation d'un produit à fouetter comprenant une phase mésomorphe stérile d'un tensioactif comestible, ce procédé comprenant la série d'étapes suivante:
(a) préparation d'un prémélange comprenant un ou des tensioactifs et 98-60% d'eau, et 0,1 à 30% de biopolymère(s), à une température supérieure à la température de Krafft;
(b) stérilisation du prémélange à une température supérieure à 115°C; et
(c) refroidissement du prémélange à une température inférieure à la température de Krafft des tensioactifs.

2. Procédé selon la revendication 1, dans lequel le prémélange comprend aussi 0,1 à 15% en poids de biopolymère(s), de préférence des protéines.

3. Procédé selon la revendication 1 ou 2, dans lequel l'étape (b) met en jeu un chauffage à une température de 130 à 150°C, pendant une durée de 0,1 à 180 secondes, mieux encore de 1 à 25 secondes.

4. Procédé selon la revendication 1, 2 ou 3, dans lequel le ou les tensioactifs comprennent un mélange de tensioactif(s) non ionique(s) et de tensioactif(s) ionique(s), dans un rapport pondéral de 100:1 à 1:10.

5. Procédé selon l'une quelconque des revendications précédentes, dans lequel la phase mésomorphe stérile est une phase lamellaire.

6. Procédé selon l'une quelconque des revendications précédentes, comprenant l'étape (d) de conditionnement du produit dans des conditions aseptiques.

7. Procédé de préparation d'une denrée alimentaire à fouetter, dans lequel le produit à fouetter comprenant une phase mésomorphe stérile de tensioactif(s), obtenue dans la revendication 1, est mélangé avec d'autres ingrédients de la denrée alimentaire.

8. Procédé selon la revendication 1, dans lequel le prémélange de (a) contient d'autres ingrédients de la denrée alimentaire.

9. Denrée alimentaire à fouetter comprenant une phase mésomorphe stérile de tensioactif(s) comestible(s) obtenue par stérilisation à une température supérieure à 115°C.

10. Denrée alimentaire à fouetter selon la revendication 9, comprenant des régions volumineuses d'une phase mésomorphe stérile de tensioactif(s) comestible(s).

11. Denrée alimentaire à fouetter selon la revendication 9 ou 10, ayant un pH d'au moins 4,6 et, de préférence, dépourvue de conservateurs.

12. Denrée alimentaire à fouetter selon l'une quelconque des revendications 9-11, ayant été choisie dans le groupe des bavarois, des crèmes non laitières et des mousses.
